# EUROPÄISCHE PATENTSCHRIFT

(11) **EP 2 510 775 B1**
(45) Veröffentlichungstag und Bekanntmachung des Hinweises auf die Patenterteilung: **31.08.2016**
(21) Anmeldenummer: 12151017.6
(22) Anmeldetag: 13.01.2012
(51) Int. Cl.: A01D 43/073, A01D 43/08

(54) **System und Verfahren zur Steuerung der Erntegutüberladung**
Method and system for controlling the transfer of harvested goods
Système et procédé de commande du transfert de récoltes

(30) Priorität: 15.04.2011 DE 102011002071
(43) Veröffentlichungstag der Anmeldung: 17.10.2012
(73) Patentinhaber: CLAAS Selbstfahrende Erntemaschinen GmbH, 33428 Harsewinkel (DE)
(72) Erfinder: Diekhans, Norbert, Dr., 33335 Gütersloh (DE); Huster, Jochen, 33330 Gütersloh (DE); Claussen, Frank, 33428 Harsewinkel (DE)

(56) Entgegenhaltungen:
- EP-A1- 2 020 174
- EP-A1- 2 245 916

## Beschreibung

Die Erfindung betrifft ein System zur Steuerung der Erntegutüberladung von einer selbstfahrenden landwirtschaftlichen Erntemaschine in den Ladebehälter eines Transportfahrzeugs, umfassend eine der Erntemaschine zugeordnete Überladeeinrichtung, aus der Erntegut in Form eines Erntegutstrahls austritt, und eine Erkennungseinrichtung, welche die relative Lage des Ladebehälters gegenüber der Erntemaschine ermittelt und an eine Steuereinheit übermittelt, wobei die Steuereinheit zumindest einen der Überladeeinrichtung zugeordneten Aktor derart betätigt, dass der Erntegutstrahl innerhalb des Ladebehälters auftrifft, um diesen mit Erntegut zu befüllen.

Selbstfahrende landwirtschaftliche Erntemaschinen wie Feldhäcksler sind mit einer Überladeeinrichtung ausgestattet, die aufgrund ihrer Funktion und Form auch als Auswurfkrümmer bezeichnet wird. Diese dient dazu, während der Erntefahrt geerntetes Gut, das die inneren Bearbeitungs- und Förderaggregate (Einzugswalzen, Häckseltrommel, Korn-Cracker, Nachbeschleuniger) des Feldhäckslers durchlaufen hat, in Form eines Erntegutstrahls in einen mitfahrenden Ladebehälter zu überladen. Der Ladebehälter kann sich auf einem Anhänger befinden, der wiederum von einem Transportfahrzeug (z.B. einem Traktor) gezogen wird, oder kann Teil eines selbstfahrenden Transportfahrzeugs (z.B. eines Lastwagens) sein.

Da sich der Feldhäcksler und das Transportfahrzeug während des Überladevorgangs mit nicht unerheblicher Geschwindigkeit über das Feld bewegen und allein schon durch Bodenunebenheiten und dadurch bedingte Spurabweichungen der fahrenden Maschinen eine absolute Parallelfahrt von Feldhäcksler und Transportfahrzeug praktisch ausgeschlossen ist, ist es zur Gewährleistung einer verlustarmen Überladung des Ernteguts erforderlich, dass sich der Überladekrümmer mittels mehrerer Aktoren unterschiedlich ausrichten lässt, um auf diese Weise den austretenden Erntegutstrahl so zu lenken, dass dieser innerhalb des Ladebehälters auftrifft. Derartige Aktoren umfassen zumeist einen Drehantrieb des Überladekrümmers um eine bezogen auf den Feldhäcksler vertikale Achse, eine Höhenverstellung des Überladekrümmers um eine bezogen auf den Feldhäcksler horizontale Achse und eine durch eine verstellbare Klappe am auswurfseitigen Ende des Auswurfkrümmers realisierte Abwurfwinkelverstellung.

Aufgrund steigender Erntegutdurchsätze bei Feldhäckslern erhöhen sich die Anforderungen an den Überladevorgang ständig, da wegen der höheren Durchsatzleistung eine Befüllung eines Ladebehälters gleichen Volumens in immer kürzerer Zeit stattfindet. Eine präzise Ausrichtung des Erntegutstrahls ist wesentliche Voraussetzung, um dies zu ermöglichen. Wegen hoher Fahrgeschwindigkeiten auf dem Feld ist eine manuelle Ausrichtung der Überladeeinrichtung für den Fahrer eines Feldhäckslers mühsam.

Die EP 2 020 174 A1 beschreibt ein System für die automatische Steuerung der Erntegutüberladung, bei dem der Überladevorgang per Kamera erfasst und die erfassten Bilder ausgewertet werden. Durch die Auswertung wird die Relativposition des Ladebehälters gegenüber der Erntemaschine ermittelt. Anhand dessen nimmt eine Steuereinrichtung eine entsprechende Ausrichtung des Auswurfkrümmers vor, wodurch automatisches Überladen ermöglicht ist.

Vorraussetzung für das System gemäß EP 2 020 174 A1 ist jedoch, dass sich der Ladebehälter innerhalb eines bestimmten Positionsbereichs relativ zur Erntemaschine befinden muss, da sonst der Auswurfkrümmer bei dessen Ausrichtung durch die Aktoren an dessen Endlagen stößt und damit die Regelung außer Kraft setzt. Zudem bleibt bei dem System unberücksichtigt, dass sich die für den Überladevorgang optimale relative Position des Ladebehälters zur Erntemaschine - beispielsweise abhängig vom Befüllzustand des Ladebehälters - während des Befüllvorgangs durchaus ändern kann. Diese beiden Beschränkungen des Systems können nur durch geeignete Steuer- bzw. Lenkeingriffe der Fahrer der Maschinen kompensiert werden und erfordern hohes Geschick und Erfahrung.

Die EP 2 245 916 A1 offenbart ein Kornübertragungs-System und Verfahren zur automatischen Steuerung der Übertragung von Korn von einem ortsbeweglichen Geber-Typ-Fahrzeug auf ein ortsbewegliches Nehmer-Typ-Fahrzeug mittels eines GPS-basierten Positionier-Systems durch Ändern der Position und Geschwindigkeit der Fahrzeuge relativ zueinander, wobei ein Steuer-Teil vorgesehen ist eine Kornübertragung zu beginnen, wenn der Entlade-Krümmer an einer Startposition bezogen auf das Nehmer-Typ-Fahrzeug angeordnet wurde, und danach Korn zu übertragen während der Entlade-Krümmer auf der Startposition verbleibt, das Nehmer-Typ-Fahrzeug entlang des Geber-Typ-Fahrzeuges zu führen bis der Entlade-Krümmer eine Endposition erreicht hat und die Kornübertragung nach Verweilen in der Endposition zu beenden.

Es ist eine Aufgabe der vorliegenden Erfindung, ein System der eingangs genannten Art anzugeben, welches die Fahrer des Transportfahrzeugs und der Erntemaschine stärker von der Beobachtung des Überladevorgangs entlastet. Weiterhin soll ein dementsprechendes Verfahren angegeben werden.

Zur Lösung wird ein System gemäß den Merkmalen des Anspruchs 1 vorgeschlagen. Erfindungsgemäß ist demnach die Steuereinheit, welche die Ansteuerung der Aktoren der Überladeeinrichtung - und damit die Ausrichtung des Erntegutstrahls - vornimmt, betreibbar, für das Transportfahrzeug ein Steuersignal zu generieren, das eine zum Überladen in den Ladebehälter geeignete Relativposition des Transportfahrzeugs gegenüber der Erntemaschine vorgibt. Dem erfindungsgemäßen System liegt die Erkenntnis zugrunde, dass für eine verlustarme selbständige Steuerung des Befüllvorgangs des Ladebehälters zwei Prozesse dynamisch auf geeignete Weise zusammenwirken müssen. Dies ist zunächst die Ausrichtung des Erntegutstrahls, welche sich durch Betätigung der Aktoren der Überladeeinrichtung kurzfristig beeinflussen lässt.

Daneben ist zugleich die Bereitstellung des Ladebehälters in einer geeigneten Relativposition zur Erntemaschine erforderlich. Dieser zweite Prozess hat gegenüber der Ausrichtung des Erntegutstrahls eine deutlich höhere Reaktionszeit. Indem die Steuereinheit, welche durch Ausrichtung der Überladeeinrichtung den Erntegutstrahl innerhalb der konstruktionsbedingten Grenzen in den Ladebehälter richtet, daneben ein an das Transportfahrzeug gerichtetes Steuersignal generiert, das eine für das Überladen in den Ladebehälter geeignete Relativposition des Transportfahrzeugs vorgibt, wird erfindungsgemäß ein System geschaffen, das die eingangs genannte Aufgabe vorteilhaft löst und die beiden Prozesse günstig miteinander verknüpft, um Überladeverluste zu vermeiden und die Fahrer zu entlasten.

Gemäß einer einfachen Weiterbildung des Systems kann das Steuersignal in einer für einen Fahrer des Transportfahrzeugs wahrnehmbaren Form ausgegeben werden. Beispielsweise könnte auf einer für den Fahrer des Transportfahrzeugs sichtbaren Anzeige eine Steueranweisung ausgegeben werden. Die Ausgabe könnte gleichermaßen akustisch über einen Lautsprecher erfolgen. Diese könnte eine Geschwindigkeitsvorgabe und/oder eine Lenkangabe umfassen. Eine derartige Signalausgabe an den Fahrer bietet den Vorteil, dass der Fahrer eine unterstützende präzise Fahranweisung erhält, gleichwohl aber noch frei entscheiden kann, ob bzw. inwieweit er dieser Anweisung folgt.

Zur Erhöhung des Komforts und zur weiteren Entlastung des Fahrers geht in bevorzugter Weise das Steuersignal in einen dem Transportfahrzeug zugeordneten Fahrregler ein, welcher das Transportfahrzeug selbsttätig gegenüber der Erntemaschine positioniert. Durch diese Maßnahme wird somit - je nach Umsetzungsgrad - eine teil- oder vollautonome, an den Überladevorgang angepasste Fahrregelung des Transportfahrzeugs geschaffen, wobei im Ergebnis die selbstfahrende Erntemaschine als Leitfahrzeug das Transportfahrzeug mitsteuert.

Dabei kann das Steuersignal eine vom Transportfahrzeug zu erreichende Fahrgeschwindigkeit und/oder einen vom Transportfahrzeug einzunehmenden Lenkwinkel beinhalten.

Gemäß einer bevorzugten Weiterbildung der Erfindung wirkt die Steuereinheit einer Annäherung des Überladevorgangs an einen kritischen Zustand durch ein geeignetes Steuersignal an das Transportfahrzeug entgegen. Durch diese Maßnahme kann beispielsweise gewährleistet werden, dass während der Erntegutüberladung dem Erreichen einer Endlage der Überladeeinrichtung, dem Erreichen einer Außengrenze des Ladebehälters und/oder dem Erreichen einer maximalen Befüllhöhe durch eine Anpassung der Relativposition des Ladebehälters an die veränderte Überladebedingung entgegengewirkt wird. Eine solche Anpassung der Relativposition wird vorzugsweise rechtzeitig - d.h. vorausschauend, nämlich vor Erreichen des kritischen Zustands - durch die Steuereinheit eingeleitet, so dass der Überladevorgang verlust- bzw. unterbrechungsfrei fortgeführt werden kann.

Entsprechende Sensoren zur Erkennung des jeweiligen kritischen Zustands sind zweckmäßig. Im Fall des Erreichens von Endlagen der Überladeeinrichtung können dies den Aktoren der Überladeeinrichtung zugeordnete Weg- oder Winkelsensoren sein. Vor Erreichen einer mittels der Sensoren erkannten Endlage leitet die Steuereinheit dabei eine Relativpositionsänderung des Transportfahrzeugs ein, um den Überladevorgang nicht durch das Erreichen der drohenden Endlage zu gefährden.

Gemäß einer weiteren vorteilhaften Ausgestaltung ist ein Sensor, bevorzugt in Form einer geeignet ausgerichteten Kamera, vorgesehen, der zur Erfassung eines Auftreffpunkts des Erntegutstrahls geeignet ist, wobei der kritische Zustand darin besteht, dass der Auftreffpunkt außerhalb des Ladebehälters liegt. Die Steuereinheit erkennt gemäß dieser Ausgestaltung, ob der Erntegutstrahl den Ladebehälter zu verlassen droht und leitet vorausschauend eine Relativpositionsänderung des Transportfahrzeugs ein.

Zur Feststellung, ob der Auftreffpunkt außerhalb oder innerhalb des Ladebehälters liegt, kann vorteilhaft ein Sensor vorgesehen sein, der zur Erfassung von Außenrändern des Ladebehälters geeignet ist. Die Steuereinheit kann so durch Positionsvergleich von Auftreffpunkt und Außenrand beurteilen, ob bzw. wo der Erntegutstrahl den Behälter trifft. Bei diesem Sensor kann es sich vorteilhaft ebenfalls um eine Kamera handeln. Bevorzugt ist dies dieselbe Kamera, die auch den Auftreffpunkt erfasst.

Ergänzend oder alternativ ist vorteilhaft ein Sensor vorgesehen, der zur Erfassung des Befüllzustands des Ladebehälters geeignet ist, wobei der kritische Zustand im Erreichen eines maximalen Befüllzustands besteht. Besonders vorteilhaft kann ein derartiger Sensor zwischen verschiedenen positionsabhängigen Befüllzuständen auf dem Ladebehälter unterscheiden. Handelt es sich bei dem Sensor um eine Kamera, so kann eine positionsabhängige Befüllzustandsunterscheidung beispielsweise durch entsprechende Bildauswertung erfolgen. Die Steuereinheit kann so bei Erreichen einer maximalen Füllhöhe an einer Position des Ladebehälters durch Einleiten einer Relativpositionsänderung des Transportfahrzeugs den Ladebehälter an anderer Position weiterbefüllen.

Gemäß einer vorteilhaften Weiterbildung der Erfindung berücksichtigt die Steuereinheit bei der Erzeugung des an das Transportfahrzeug gerichteten Steuersignals eine Befüllstrategie, die bevorzugt durch den Maschinenbediener auswählbar ist. Eine Befüllstrategie kann beispielsweise darin bestehen, den Ladebehälter von vorn nach hinten (oder umgekehrt) zu befüllen.

Es kann sich bei der Überladeeinrichtung grundsätzlich um eine beliebig gestaltete Einrichtung handeln, die sich zur Ausbringung eines Erntegutstrahls eignet. Dementsprechend können unterschiedlichste Aktoren verwendet werden, um den Erntegutstrahl auszurichten. Insbesondere im Fall eines für Feldhäcksler üblichen Auswurfkrümmers handelt es sich bei dem zumindest einen der Überladeeinrichtung zugeordneten Aktor um einen Aktor zur Höhensteuerung der Überladeeinrichtung, einen Aktor zur Drehung der Überladeeinrichtung und einen Aktor zur Klappensteuerung der Überladeeinrichtung. Zusätzlich kann ein Aktor zur Spaltweitenverstellung am Nachbeschleuniger und/oder ein beliebiger bauartbedingter sonstiger den Auftreffpunkt beeinflussender Aktor berücksichtigt werden.

Als Erkennungseinrichtung zur Ermittlung der relativen Lage des Ladebehälters gegenüber der Erntemaschine sind unterschiedliche Einrichtungen denkbar. Bevorzugt weist die Erkennungseinrichtung einen optischen Sensor beispielsweise in Form einer Kamera auf. Eine derartige Kamera kann beispielsweise an der Erntemaschine, insbesondere an der Überladeeinrichtung angeordnet und so ausgerichtet sein, dass diese den Ladebehälter zumindest bereichsweise optisch erfasst. Mittels einer elektronischen Bildauswertung erfolgt dann die Ermittlung der relativen Lage, wobei im Fall einer Anbringung der Kamera an der (beweglichen) Überladeeinrichtung die Stellung der Überladeeinrichtung zu berücksichtigen ist. Andere Anbringungsmöglichkeiten von Kameras zur Ermittlung der relativen Lage sind denkbar. So könnte alternativ oder ergänzend eine Kamera am Transportfahrzeug oder am Ladebehälter angeordnet sein, die beispielsweise einen oder mehrere Referenzpunkte an der Erntemaschine optisch erfasst. Durch entsprechende Bildauswertung ließe sich auch daraus die relative Lage des Ladebehälters ermitteln.

Die Verwendung eines Systems aus mehreren Kameras, welche eine Erfassung unterschiedlicher Perspektiven vornehmen, kann die allgemein Genauigkeit der Bildauswertung und damit der Relativpositionsermittlung erhöhen. Vorteilhaft kommt eine 3-D-Kamera oder ein Profil eines Laserscanners zum Einsatz.

Gemäß einer alternativen oder ergänzenden Weiterbildung der Erfindung ist es denkbar, eine Erkennungseinrichtung zu verwenden, die geeignet ist, die relative Lage des Ladebehälters durch den Vergleich von Positionsdaten der Erntemaschine mit Positionsdaten des Ladebehälters oder des Transportfahrzeugs zu ermitteln. Dazu können Erntemaschine und Transportfahrzeug bzw. Ladebehälter mit Navigationseinheiten ausgestattet sein, welche deren Positionen per Funk austauschen.

Das erfindungsgemäße System eignet sich zur Steuerung der Erntegutüberladung von selbstfahrenden Erntemaschinen. Bevorzugt handelt es sich dabei um einen Feldhäcksler oder Mähdrescher.

Weiterhin wird zur Lösung der eingangs genannten Aufgabe ein Verfahren mit den Merkmalen des Anspruchs 14 vorgeschlagen. Das Verfahren gemäß Anspruch 14 erzielt dem System gemäß Anspruch 1 entsprechende Wirkungen, weshalb auf die dortigen entsprechend anzuwendenden Ausführungen verwiesen wird.

Die Erfindung wird im Folgenden unter Hinweis auf die beigefügten Figuren anhand eines Ausführungsbeispiels näher erläutert. Daraus ergeben sich auch weitere Einzelheiten und Vorteile der Erfindung. Es zeigen:
- Fig. 1: eine schematische Rückansicht eines Feldhäckslers beim seitlichen Überladen von Erntegut in einen Ladebehälter,
- Fig. 2: eine schematische Draufsicht auf den in Fig. 1 dargestellten Sachverhalt.

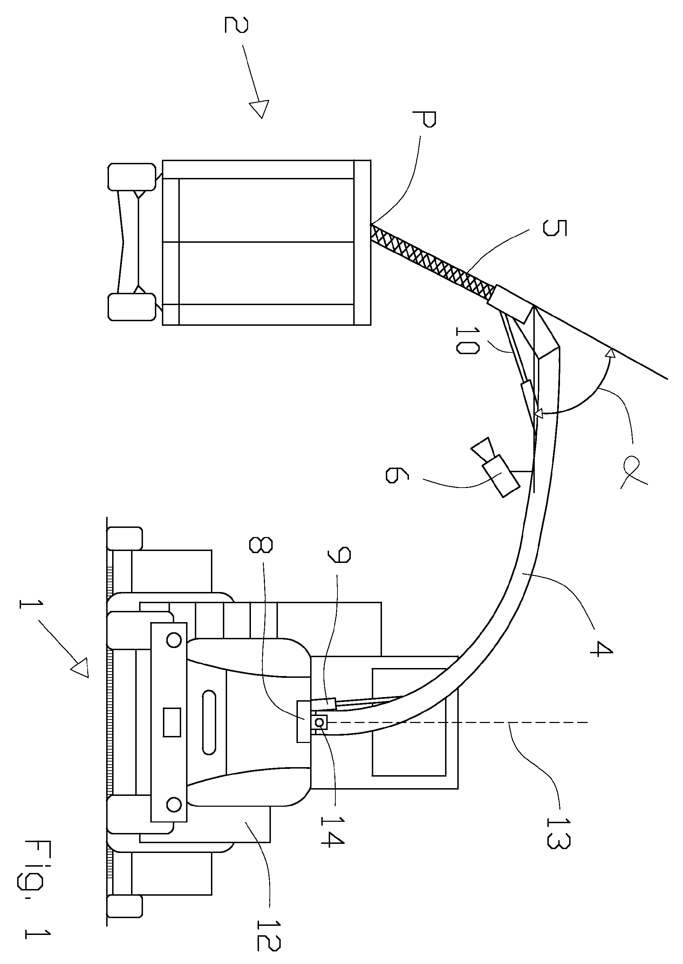

Fig. 1 zeigt in schematischer Ansicht von hinten einen selbstfahrenden Feldhäcksler 1, der geerntetes und bearbeitetes Erntegut mittels eines Auswurfkrümmers 4 in Form eines Erntegutstrahls 5 in einen seitlich des Feldhäckslers 1 befindlichen Ladebehälter 2 wirft (überlädt). Der Ladebehälter 2 ist auf ein fahrbares Gestell montiert und wird von einem in dieser Ansicht durch den Ladebehälter 2 verdeckten Transportfahrzeug parallel zur Fahrtrichtung des Feldhäckslers 1 gezogen. Der Erntegutstrahl 5 trifft in einem Auftreffpunkt P auf den Ladebehälter 2, der innerhalb der Außenwände des Ladebehälters 2 liegt, so dass das Erntegut verlustfrei überladen wird.

Unter anderem zur Beeinflussung der Lage des Auftreffpunkts P auf den Ladebehälter 2, lässt sich der Auswurfkrümmer 4 durch einen Drehantrieb 8 um eine vertikale Achse 13 gegenüber dem Maschinenrahmen 12 des Feldhäckslers 1 verschwenken und durch einen Hubzylinder 9 um eine horizontale Achse 14 gegenüber dem Maschinenrahmen 12 des Feldhäckslers 1 in der Höhe verschwenken. Mittels eines Klappenstellzylinders 10 lässt sich weiterhin der Abwurfwinkel α des Erntegutstrahls 5 aus dem Auswurfkrümmer 4 einstellen.

Am Auswurfkrümmer 4 ist eine Kamera 6 angebracht, welche zur optischen Erfassung des Ladebehälters 2 einschließlich des Auftreffpunktes P ausgerichtet ist.

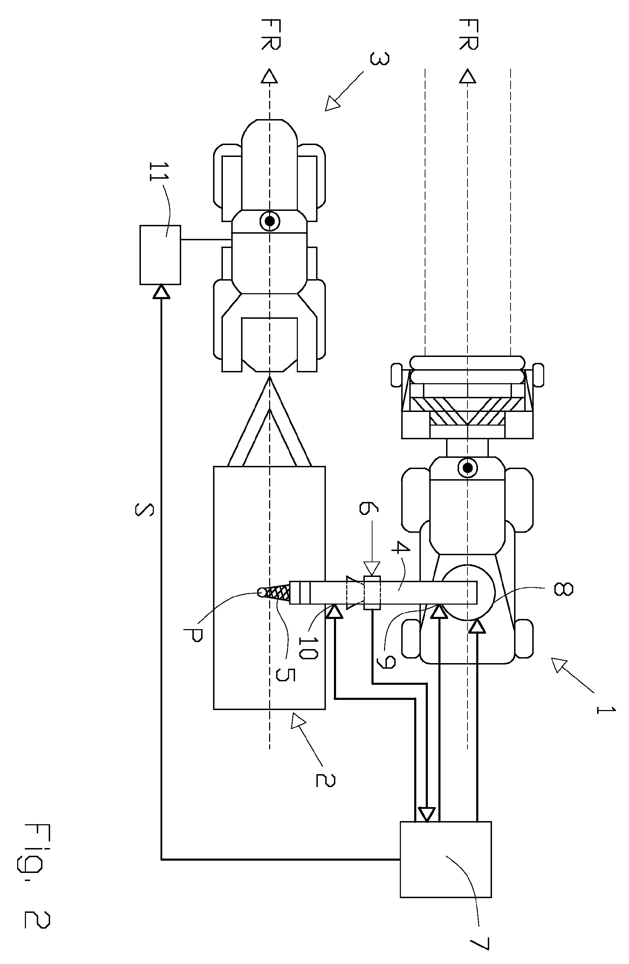

Die Funktionsweise einschließlich der erzielten Effekte wird im Folgenden anhand Fig. 2 erläutert, welche den Sachverhalt aus Fig. 1 in Draufsicht zeigt. Der in Fig. 2 gezeigte Feldhäcksler 1 und der vom Transportfahrzeug 3 gezogene Ladebehälter 2 weisen die bereits zu Fig. 1 genannten Merkmale auf. Zur Vermeidung von Wiederholungen sei auf die diesbezüglichen obigen Ausführungen verwiesen.

Zusätzlich zur Darstellung gemäß Fig. 1 sind in Fig. 2 das Transportfahrzeug 3, eine Steuereinheit , ein Regler sowie schematische Signalleitungen dargestellt, um anhand eines Ausführungsbeispiels die Funktion und Wirkungsweise eines erfindungsgemäßen Systems bzw. Verfahrens zur Steuerung der Erntegutüberladung zu erläutern.

Gemäß Fig. 2 bewegen sich der Feldhäcksler 1 und das Transportfahrzeug 3, hier ein Traktor, an den der (auf einem Fahrgestell befindliche) Ladebehälter 2 angehängt ist, mit in etwa gleicher Geschwindigkeit in Fahrtrichtung FR. Die am Auswurfkrümmer 4 angeordnete Kamera 6 erfasst optisch den Ladebehälter 2 (vgl. Fig. 1) und ermittelt anhand einer Bildauswertung (z.B. durch Erkennung der Außenkanten des Ladebehälters 2) unter Berücksichtigung der Stellung des Überladekrümmers 4 die relative Lage des Ladebehälters 2 gegenüber dem Feldhäcksler 1. Die Information wird an eine Steuereinheit 7 übermittelt.

Die Steuereinheit 7 ist wiederum mit den Aktoren 8, 9, 10 verbunden und steuert diese unter Berücksichtigung der ermittelten relativen Lage derart an, dass der Erntegutstrahl 5 im Auftreffpunkt P innerhalb des Ladebehälters 2 auftrifft, um diesen mit Erntegut zu befüllen.

Während der Befüllung beobachtet die Kamera 6 nicht nur die relative Lage des Ladebehälters 2, sondern auch dessen Befüllzustand. Wird in einem Abschnitt des Ladebehälters 2 ein maximaler Füllstand erreicht, so veranlasst die Steuereinheit 7 selbständig ein Umschwenken des Auswurfkrümmers 4, um einen anderen Abschnitt des Ladebehälters 2 zu befüllen. Dazu werden einzelne oder mehrere der Aktoren 8, 9, 10 durch die Steuereinheit 7 betätigt. Für die Vorgehensweise der Befüllung kann die Steuereinheit 7 vorteilhaft eine durch den Bediener des Feldhäckslers 1 auswählbare Befüllstrategie berücksichtigen. Beispielsweise könnte eine Befüllstrategie beinhalten, dass der Ladebehälter 2 von vorn nach hinten befüllt wird. Beliebige andere Strategien, abhängig von Einzelumständen (u.a. Behältergröße/-form, Randhöhe, Befüllzustand, Überladeabstand etc.), sind denkbar.

Das so beschriebene Überladen kann nur zuverlässig stattfinden, wenn sich der Ladebehälter 2 in einer relativen Lage gegenüber dem Feldhäcksler 1 befindet, die innerhalb der mit dem Auswurfkrümmer 4 erzielbaren Reichweite liegt. Verlässt der Ladebehälter 2 diesen Bereich - beispielsweise durch zu schnelles oder langsames Fahren des Traktors 3 - so liegt der Auftreffpunkt P außerhalb der Ladebehältergrenzen und es kommt zu hohen Erntegutverlusten. Das gleiche passiert, wenn der Auswurfkrümmer 4 - beispielsweise beim Verfolgen einer Befüllstrategie (denkbar: "Beladung von vorne nach hinten") - eine Endlage erreicht, der Auftreffpunkt P also nicht weiter in eine erforderliche Richtung verlagert werden kann.

Das erfindungsgemäße System bzw. Verfahren löst dieses Problem dadurch, dass die Steuereinheit 7 - neben der Betätigung der Überladeeinrichtung 4 - ein an das Transportfahrzeug 3 gerichtetes Steuersignal S generiert, das dem Transportfahrzeug 3 eine Relativposition gegenüber der Erntemaschine 1 vorgibt, welche sich zum Überladen in den Ladebehälter 2 eignet. Im dargestellten Ausführungsbeispiel nach Fig. 2 sendet dazu die Steuereinheit 7 ein Steuersignal S an einen dem Transportfahrzeug 3 zugeordneten Fahrregler 11 (beispielsweise per Funk; die in Fig. 2 gezeichnete Linie zwischen der Steuereinheit 7 und dem Fahrregler 11 stellt demnach keine Leitung, sondern einen Informationsfluss dar), welcher das Transportfahrzeug 3 selbsttätig gegenüber der Erntemaschine 1 positioniert. Der Fahrregler 11 erreicht dies durch aktiven Eingriff in die Fahrgeschwindigkeit und/oder den Lenkwinkel des Transportfahrzeugs 3.

Im gezeigten Ausführungsbeispiel wird die relative Lage des Ladebehälters 2 gegenüber der Erntemaschine einzig mittels Auswertung des optisch erfassten Kamerabilds der Kamera 6 ermittelt. Alternativ oder ergänzend ist auch ein technisch anderes Prinzip für die Ermittlung der relativen Lage denkbar. Beispielsweise könnten die Erntemaschine 1 und das Transportfahrzeug 3 und/oder der Ladebehälter 2 mit (nicht gezeigten) Positionssensoren (z.B. GPS-Navigationseinheiten) ausgestattet sein. Die Ermittlung der relativen Lage des Ladebehälters erfolgte dann durch Vergleich der jeweiligen Positionsdaten, die beispielsweise über Funk von Fahrzeug zu Fahrzeug übermittelt würden, und Übermittlung der ermittelten relativen Lage an die Steuereinheit 7. Ebenfalls wäre es denkbar, optisch ermittelte Lageinformationen mit per derartigen Positionssensoren ermittelten Lageinformationen abzugleichen, um die Genauigkeit der Lagebestimmung zu erhöhen.

Im Ergebnis wird bei dem beschriebenen System bzw. Verfahren die verhältnismäßig schnell reagierende Regelung des Auswurfkrümmers 4 durch die verhältnismäßig langsam reagierende Regelung der Relativpositionierung des Transportfahrzeugs überlagert mit dem vorteilhaften Effekt, dass die Steuereinheit 7 einer Annäherung des Überladevorgangs an einen kritischen Zustand durch ein geeignetes Steuersignal S an das Transportfahrzeug 3 entgegenwirken kann.

**Bezugszeichenliste**

| | | | |
|---|---|---|---|
| 1 | Feldhäcksler | P | Auftreffpunkt |
| 2 | Ladebehälter | S | Steuersignal |
| 3 | Transportfahrzeug | FR | Fahrtrichtung |
| 4 | Auswurfkrümmer | | |
| 5 | Erntegutstrahl | | |
| 6 | Kamera | | |
| 7 | Steuereinheit | | |
| 8 | Drehantrieb Krümmer | | |
| 9 | Hubzylinder Krümmer | | |
| 10 | Klappenstellzylinder | | |
| 11 | Fahrregler | | |
| 12 | Maschinenrahmen | | |
| 13 | vertikale Schwenkachse | | |
| 14 | horizontale Schwenkachse | | |

## Patentansprüche

1. System zur Steuerung der Erntegutüberladung von einer selbstfahrenden landwirtschaftlichen Erntemaschine (1) in den Ladebehälter (2) eines Transportfahrzeugs (3), umfassend
eine der Erntemaschine (1) zugeordnete Überladeeinrichtung (4), aus der Erntegut in Form eines Erntegutstrahls (5) austritt, und
eine Erkennungseinrichtung, welche die relative Lage des Ladebehälters (2) gegenüber der Erntemaschine (1) ermittelt und an eine Steuereinheit (7) übermittelt,
wobei die Steuereinheit (7) zumindest einen der Überladeeinrichtung (4) zugeordneten Aktor (8, 9, 10) derart betätigt, dass der Erntegutstrahl (5) innerhalb des Ladebehälters (2) auftrifft, um diesen mit Erntegut zu befüllen,
**dadurch gekennzeichnet, dass** die Steuereinheit (7) weiterhin betreibbar ist, für das Transportfahrzeug (3) ein Steuersignal (S) zu generieren, das eine zum Überladen in den Ladebehälter (2) geeignete Relativposition des Transportfahrzeugs (3) gegenüber der Erntemaschine (1) vorgibt, wobei das Steuersignal (S) in einen dem Transportfahrzeug (3) zugeordneten Fahrregler (11) eingeht, welcher das Transportfahrzeug (3) selbsttätig gegenüber der Erntemaschine (1) positioniert, wobei die selbstfahrende Erntemaschine (1) als Leitfahrzeug das Transportfahrzeug (3) mitsteuert.

2. System nach Anspruch 1, **dadurch gekennzeichnet, dass** das Steuersignal (S) in einer für einen Fahrer des Transportfahrzeugs (3) wahrnehmbaren Form ausgegeben wird.

3. System nach Anspruch 1 oder 2 , **dadurch gekennzeichnet, dass** das Steuersignal (S) eine vom Transportfahrzeug (3) zu erreichende Fahrgeschwindigkeit und/oder einen vom Transportfahrzeug (3) einzunehmenden Lenkwinkel beinhaltet.

4. System nach einem der vorigen Ansprüche, **dadurch gekennzeichnet, dass** die Steuereinheit (7) einer Annäherung des Überladevorgangs an einen kritischen Zustand durch ein geeignetes Steuersignal (S) an das Transportfahrzeug (3) entgegenwirkt.

5. System nach Anspruch 4, **dadurch gekennzeichnet, dass** ein Sensor (6) vorgesehen ist, der zur Erfassung eines Auftreffpunkts (P) des Erntegutstrahls (5) geeignet ist, wobei der kritische Zustand darin besteht, dass der Auftreffpunkt (P) außerhalb des Ladebehälters (2) liegt.

6. System nach einem der vorigen Ansprüche, **dadurch gekennzeichnet, dass** ein Sensor (6) vorgesehen ist, der zur Erfassung von Außenrändern des Ladebehälters (2) geeignet ist.

7. System nach einem der Ansprüche 4 bis 6, **dadurch gekennzeichnet, dass** ein Sensor (6) vorgesehen ist, der zur Erfassung des Befüllzustands des Ladebehälters (2) geeignet ist, wobei der kritische Zustand im Erreichen eines maximalen Befüllzustands besteht.

8. System nach einem der Ansprüche 4 bis 7, **dadurch gekennzeichnet, dass** der kritische Zustand im Erreichen einer Endlage der Überladeeinrichtung (4) besteht.

9. System nach einem der vorigen Ansprüche, **dadurch gekennzeichnet, dass** die Steuereinheit (7) bei der Erzeugung des Steuersignals (S) eine vorgebbare Befüllstrategie berücksichtigt.

10. System nach einem der vorigen Ansprüche, **dadurch gekennzeichnet, dass** es sich bei dem zumindest einen Aktor (8, 9, 10) um einen Aktor (9) zur Höhensteuerung der Überladeeinrichtung (4), einen Aktor (8) zur Drehung der Überladeeinrichtung (4), einen Aktor (10) zur Klappensteuerung der Überladeeinrichtung (4), einen Aktor zur Spaltweitenverstellung am Nachbeschleuniger und/oder einen sonstigen den Auftreffpunkt (P) beeinflussenden Aktor handelt.

11. System nach einem der vorigen Ansprüche, **dadurch gekennzeichnet, dass** die Erkennungseinrichtung eine Kamera (6) oder ein System aus mehreren Kameras aufweist.

12. System nach Anspruch 11, **dadurch gekennzeichnet, dass** die Kamera (6) an der Erntemaschine (1) angeordnet und zur optischen Erfassung des Ladebehälters (2) ausgerichtet ist.

13. System nach einem der vorigen Ansprüche, **dadurch gekennzeichnet, dass** die Erkennungseinrichtung geeignet ist, die relative Lage des Ladebehälters (2) durch den Vergleich von Positionsdaten der Erntemaschine (1) mit Positionsdaten des Ladebehälters (2) oder des Transportfahrzeug (3) zu ermitteln.

14. System nach einem der vorigen Ansprüche, **dadurch gekennzeichnet, dass** es sich bei der Erntemaschine um einen Feldhäcksler (1) oder Mähdrescher handelt.

15. Verfahren zur Steuerung der Erntegutüberladung von einer selbstfahrenden landwirtschaftlichen Erntemaschine (1) in den Ladebehälter (2) eines Transportfahrzeugs (3) mittels einer Überladeeinrichtung (4), aus der Erntegut in Form eines Erntegutstrahls (5) austritt, wobei die relative Lage des Ladebehälters (2) gegenüber der Erntemaschine (1) ermittelt wird, um die Überladeeinrichtung (4) mittels zumindest eines Aktors (8, 9, 10) derart auszurichten, dass der Erntegutstrahl (5) innerhalb des Ladebehälters (2) auftrifft, um diesen mit Erntegut zu befüllen,
**dadurch gekennzeichnet, dass** das Transportfahrzeug (3) in eine zum Überladen in den Ladebehälter (2) geeignete Relativposition gegenüber der Erntemaschine (1) gesteuert wird, wobei das Steuersignal (S) in einen dem Transportfahrzeug (3) zugeordneten Fahrregler (11) eingeht, welcher das Transportfahrzeug (3) selbsttätig gegenüber der Erntemaschine (1) positioniert, wobei die selbstfahrende Erntemaschine (1) als Leitfahrzeug das Transportfahrzeug (3) mitsteuert.

## Claims

1. A system for controlling crop material transfer from a self-propelled agricultural harvesting machine (1) into the loading container (2) of a transport vehicle (3) including
a transfer device (4) which is associated with the harvesting machine (1) and from which crop material issues in the form of a crop material jet (5), and
a detection device which ascertains the relative position of the loading container (2) with respect to the harvesting machine (1) and communicates same to a control unit (7),
wherein the control unit (7) actuates at least one actuator (8, 9, 10) associated with the transfer device (4) in such a way that the crop material jet (5) is incident within the loading container (2) to fill same with crop material,
**characterised in that** the control unit (7) is further operable to generate for the transport vehicle (3) a control signal (S) which specifies a relative position, suitable for the transfer to the loading container (2), of the transport vehicle (3) with respect to the harvesting machine (1), wherein the control signal (S) goes into a travel regulator (11) which is associated with the transport vehicle (3) and which automatically positions the transport vehicle (3) with respect to the harvesting machine (1), wherein the self-propelled harvesting machine (1) as the controlling vehicle also controls the transport vehicle (3).

2. A system according to claim 1 **characterised in that** the control signal (S) is output in a form that a driver of the transport vehicle (3) can understand.

3. A system according to claim 1 or claim 2 **characterised in that** the control signal (S) includes a travel speed to be attained by the transport vehicle (3) and/or a steering angle to be adopted by the transport vehicle (3).

4. A system according to one of the preceding claims **characterised in that** the control unit (7) counteracts an approach of the transfer operation to a critical state by a suitable control signal (S) to the transport vehicle (3).

5. A system according to claim 4 **characterised in that** there is provided a sensor (6) suitable for detecting a point of incidence (P) of the crop material jet (5), wherein the critical state is that the point of incidence (P) lies outside the loading container (2).

6. A system according to one of the preceding claims **characterised in that** there is provided a sensor (6) suitable for detecting the outside edges of the loading container (2).

7. A system according to one of claims 4 to 6 **characterised in that** there is provided a sensor (6) suitable for detecting the filling condition of the loading container (2), wherein the critical state involves attainment of a maximum filling condition.

8. A system according to one of claims 4 to 7 **characterised in that** the critical state involves reaching an end position of the transfer device (4).

9. A system according to one of the preceding claims **characterised in that** the control unit (7) in production of the control signal (S) takes account of a predeterminable filling strategy.

10. A system according to one of the preceding claims **characterised in that** the at least one actuator (8, 9, 10) is an actuator (9) for height control of the transfer device (4), an actuator (8) for turning the transfer device (4), an actuator (10) for flap control of the transfer device (4), an actuator for gap width adjustment at the post-accelerating means and/or another actuator influencing the point of incidence (P).

11. A system according to one of the preceding claims **characterised in that** the detection device has a camera (6) or a system comprising a plurality of cameras.

12. A system according to claim 11 **characterised in that** the camera (6) is arranged on the harvesting machine (1) and is adapted for optical detection of the loading container (2).

13. A system according to one of the preceding claims **characterised in that** the detection device is adapted to ascertain the relative position of the loading container (2) by the comparison of position data of the harvesting machine (1) with position data of the loading container (2) or the transport vehicle (3).

14. A system according to one of the preceding claims **characterised in that** the harvesting machine is a forage harvester (1) or a combine harvester.

15. A method of controlling crop material transfer from a self-propelled agricultural harvesting machine (1) into the loading container (2) of a transport vehicle (3) by means of a transfer device (4) from which crop material issues in the form of a crop material jet (5), wherein the relative position of the loading container (2) with respect to the harvesting machine (1) is ascertained to orient the transfer device (4) by means of at least one actuator (8, 9, 10) in such a way that the crop material jet (5) is incident within the loading container (2) to fill same with crop material,
**characterised in that** the transport vehicle (3) is controlled with respect to the harvesting machine (1) into a relative position suitable for transfer into the loading container (2), wherein the control signal (S) goes into a travel regulator (11) which is associated with the transport vehicle (3) and which automatically positions the transport vehicle (3) with respect to the harvesting machine (1), wherein the self-propelled harvesting machine (1) as the controlling vehicle also controls the transport vehicle (3).

## Revendications

1. Système de commande du transfert d'un produit de récolte d'une machine de récolte agricole automotrice (1) dans le réservoir de chargement (2) d'un véhicule de transport (3), comprenant un dispositif de transfert (4) associé à la machine de récolte (1), duquel un produit de récolte sort sous la forme d'un jet de produit de récolte (5), et un dispositif de détection qui détermine la position relative du réservoir de chargement (2) par rapport à la machine de récolte (1) et la transmet à une unité de commande (7), l'unité de commande (7) actionnant au moins un actionneur (8, 9, 10) associé au dispositif de transfert (4), de façon que le jet de produit de récolte (5) parvienne à l'intérieur du réservoir de chargement (2) afin de remplir celui-ci de produit de récolte, **caractérisé en ce que** l'unité de commande (7) peut également être utilisée pour générer, pour le véhicule de transport (3), un signal de commande (S) qui prescrit une position relative appropriée du véhicule de transport (3) par rapport à la machine de récolte (1) pour le transfert dans le réservoir de chargement (2), le signal de commande (S) étant pris en compte dans un régulateur de marche (11) associé au véhicule de transport (3), lequel positionne le véhicule de transport (3) automatiquement par rapport à la machine de récolte (1), la machine de récolte automotrice (1) participant à la commande du véhicule de transport (3) en tant que véhicule de référence.

2. Système selon la revendication 1, **caractérisé en ce que** le signal de commande (S) est émis sous une forme perceptible par un conducteur du véhicule de transport (3).

3. Système selon la revendication 1 ou 2, **caractérisé en ce que** le signal de commande (S) contient une vitesse de marche à atteindre par le véhicule de transport (3) et/ou un angle de braquage à adopter par le véhicule de transport (3).

4. Système selon l'une des revendications précédentes, **caractérisé en ce que** l'unité de commande (7) s'oppose à une approche d'un état critique du processus de transfert par un signal de commande (S) approprié envoyé au véhicule de transport (3).

5. Système selon la revendication 4, **caractérisé en ce qu'**un capteur (6) est prévu, lequel est adapté à la détection d'un point d'impact (P) du jet de produit de récolte (5), l'état critique consistant **en ce que** le point d'impact (P) se situe à l'extérieur du réservoir de chargement (2).

6. Système selon l'une des revendications précédentes, **caractérisé en ce qu'**un capteur (6) est prévu, lequel est adapté à la détection de bords extérieurs du réservoir de chargement (2).

7. Système selon l'une des revendications 4 à 6, **caractérisé en ce qu'**un capteur (6) est prévu, lequel est adapté à la détection de l'état de remplissage du réservoir de chargement (2), l'état critique consistant en l'atteinte d'un état de remplissage maximal.

8. Système selon l'une des revendications 4 à 7, **caractérisé en ce que** l'état critique consiste en l'atteinte d'une position extrême du dispositif de transfert (4) .

9. Système selon l'une des revendications précédentes, **caractérisé en ce que** l'unité de commande (7) tient compte d'une stratégie de remplissage prescriptible dans la génération du signal de commande (S) .

10. Système selon l'une des revendications précédentes, **caractérisé en ce que** ledit au moins un actionneur (8, 9, 10) est un actionneur (9) de commande de hauteur du dispositif de transfert (4), un actionneur (8) de rotation du dispositif de transfert (4), un actionneur (10) de commande du déflecteur du dispositif de transfert (4), un actionneur de réglage de largeur de fente sur l'accélérateur de décharge et/ou un autre actionneur ayant une influence sur le point d'impact (P).

11. Système selon l'une des revendications précédentes, **caractérisé en ce que** le dispositif de détection comporte une caméra (6) ou un système de plusieurs caméras.

12. Système selon la revendication 11, **caractérisé en ce que** la caméra (6) est disposée sur la machine de récolte (1) et orientée de façon à permettre la détection optique du réservoir de chargement (2).

13. Système selon l'une des revendications précédentes, **caractérisé en ce que** le dispositif de détection permet de déterminer la position relative du réservoir de chargement (2) en comparant des données de position de la machine de récolte (1) avec des données de position du réservoir de chargement (2) ou du véhicule de transport (3).

14. Système selon l'une des revendications précédentes, **caractérisé en ce que** la machine de récolte est une ensileuse (1) ou une moissonneuse-batteuse.

15. Procédé de commande du transfert d'un produit de récolte d'une machine de récolte agricole automotrice (1) dans le réservoir de chargement (2) d'un véhicule de transport (3) au moyen d'un dispositif de transfert (4) duquel un produit de récolte sort sous la forme d'un jet de produit de récolte (5), la position relative du réservoir de chargement (2) par rapport à la machine de récolte (1) étant déterminée, pour orienter le dispositif de transfert (4) au moyen d'au moins un actionneur (8, 9, 10) de façon que le jet de produit de récolte (5) parvienne à l'intérieur du réservoir de chargement (2) afin de remplir celui-ci de produit de récolte, **caractérisé en ce que** le véhicule de transport (3) est commandé dans une position relative appropriée par rapport à la machine de récolte (1) pour le transfert dans le réservoir de chargement (2), le signal de commande (S) étant pris en compte dans un régulateur de marche (11) associé au véhicule de transport (3), lequel positionne le véhicule de transport (3) automatiquement par rapport à la machine de récolte (1), la machine de récolte automotrice (1) participant à la commande du véhicule de transport (3) en tant que véhicule de référence.
